# EUROPEAN PATENT SPECIFICATION

(11) **EP 3 403 981 B1**
(45) Date of publication and mention of the grant of the patent: **03.08.2022**
(21) Application number: 18172169.7
(22) Date of filing: 14.05.2018
(51) Int. Cl.: B23K 9/173, B23K 9/23, B23K 20/12, B23K 20/233, B23K 101/08, B23K 101/38, B23K 103/08, B22F 10/10, B22F 10/20, H01F 41/02, H02K 49/10, H02K 7/06, H02K 15/03, B33Y 80/00, B33Y 10/00, B23K 9/04, B66B 9/02

(54) **MAGNETIC ELEVATOR DRIVE MEMBER AND METHOD OF MANUFACTURE**
MAGNETISCHES AUFZUGSANTRIEBSELEMENT UND VERFAHREN ZUR HERSTELLUNG
ÉLÉMENT D'ENTRAÎNEMENT D'ASCENSEUR MAGNÉTIQUE ET PROCÉDÉ DE FABRICATION

(30) Priority: 15.05.2017 US 201715595089
(43) Date of publication of application: 21.11.2018
(73) Proprietor: Otis Elevator Company, Farmington, Connecticut 06032 (US)
(72) Inventor: TANGUDU, Jagadeesh Kumar, East Hartford, CT Connecticut 06108 (US); KLECKA, Michael A., East Hartford, CT Connecticut 06108 (US); FARGO, Richard N., Plainville, CT Connecticut 06062 (US)
(74) Representative: Schmitt-Nilson Schraud Waibel Wohlfrom Patentanwälte Partnerschaft mbB

(56) References cited:
- EP-A1- 3 247 028
- EP-A2- 3 088 849
- US-A- 5 079 458
- US-A1- 2015 307 325

## Description

Elevator systems are in widespread use. The mechanism for propelling an elevator car may be hydraulic or traction-based. Modernization efforts have recently focused on replacing round steel ropes in traction-based systems with lighter weight belts, for example, and reducing the size of the machine components.

It has more recently been proposed to change elevator propulsion systems to include a magnetic drive. Linear and rotary magnetic drive arrangements are known in various contexts. It has recently been proposed to include a rotary magnetic arrangement for propelling an elevator car. One such arrangement is described in the United States Patent Application Publication No. US 2015/0307325. While such arrangements have potential benefits and advantages, implementing them on a commercial scale is not without challenges. For example, material and manufacturing costs could become prohibitively expensive. Another issue presented to those skilled in the art is how to realize an arrangement of components to ensure efficient and reliable operation.

US 5,079,458 discloses a non-contacting linear drive including a fixed guidance part constructed as a profile part whose magnetic material in the vicinity of helixes approaches the latter and, at a distance from the helixes, forms a return path to the next helix. The rotary part has spaced double helixes, a constant magnetic field being produced in the magnetic circuit formed by a double helix and the magnetic return path. A very simple and economic construction and manufacture are consequently possible. The guidance part can be constructed as a profile rail or as a tube and has window-like recesses, corrugations or ribs. The double helix can be constructed with permanent magnets placed in the helixes with radial orientation or with permanent magnets provided between soft magnetic helixes in axial orientation.

EP 3 088 849 A2 discloses a sensor system includes a load-carrying element, an encoder structure, and a magnetic flux transducer. The load-carrying element is formed of substantially nonmagnetic material, while the encoder structure is formed of magnetic material deposited via cold spray additive manufacturing within the load-carrying element. The magnetic flux transducer is disposed adjacent the load-carrying element to sense changes in magnetic flux caused by relative motion of the encoder structure.

EP 3 247 028 A1 discloses a method of making a rotary magnetic drive member includes establishing a plurality of magnet retainers on a rod using an additive manufacturing process. Magnets are inserted between the retainers with magnetic poles of axially adjacent ones of the magnets oriented with like poles facing toward a portion of one of the retainers between the adjacent ones of the magnets.

Aspects of the invention may solve one or more problems of the art, with the solutions set forth in the independent claims and refinements recited in the dependent claims.

The present invention is defined by the independent claims.

Advantageous embodiments are described in dependent claims.

In an example embodiment having one or more features of the method of any of the previous paragraphs, the magnetic material comprises low carbon steel.

In an example embodiment having one or more features of the method of any of the previous paragraphs, the non-magnetic material comprises stainless steel.

In an example embodiment having one or more features of the method of any of the previous paragraphs, the additive manufacturing process comprises cold spray deposition.

In an example embodiment having one or more features of the method of any of the previous paragraphs, the additive manufacturing process comprises directed energy deposition.

In an example embodiment having one or more features of the method of any of the previous paragraphs, the helical magnet comprises a permanent magnet material.

In an example embodiment having one or more features of the method of any of the previous paragraphs, the helical magnet consists entirely of metal.

An example embodiment having one or more features of the method of any of the previous paragraphs includes establishing a pattern of magnetic poles on segments of the helical magnetic including like magnetic poles in axially adjacent segments of the helical magnet.

In an example embodiment having one or more features of the method of any of the previous paragraphs, establishing the pattern of magnetic poles comprises using an external exciter coil in combination with a capacitive charge that provides a short impulse magnetic field to magnetize in a required direction.

The various features and advantages of at least one disclosed example embodiment will become apparent to those skilled in the art from the following detailed description. The drawings that accompany the detailed description can be briefly described as follows.
Figure 1 schematically illustrates selected portions of an elevator system designed according to an embodiment of this invention.
Figure 2 diagrammatically illustrates selected features of an example magnetic drive member designed according to an embodiment of this invention.
Figure 3 schematically illustrates selected features of the embodiment of Figure 2.
Figure 4 schematically illustrates a method of manufacturing a magnetic drive member designed according to an embodiment of this invention.

Example embodiments of this invention provide a magnetic screw or drive member for propelling an elevator car. Embodiments of a method of manufacturing such a magnetic drive member provide a cost-effective approach that results in an economical, effective and reliable magnetic drive member that is useful in an elevator system, for example.

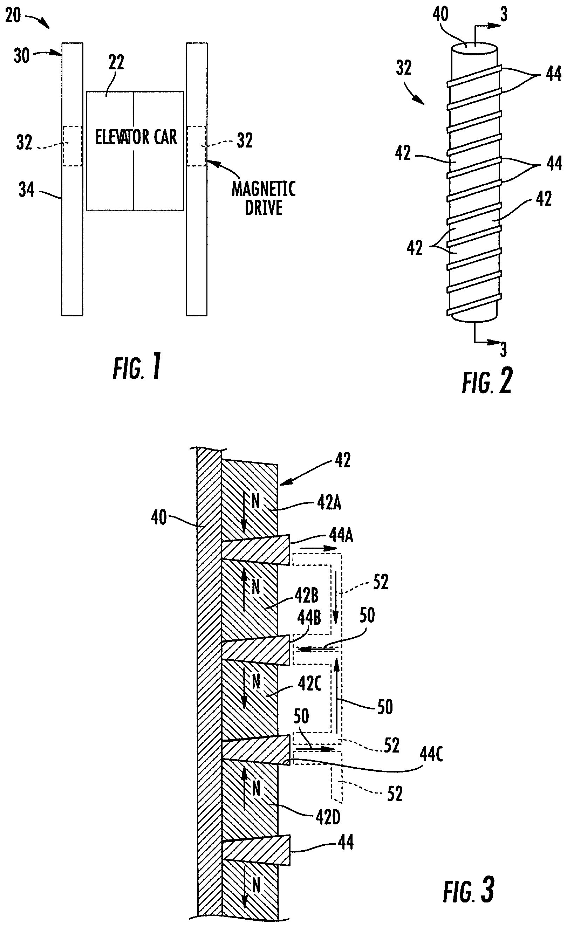

Figure 1 schematically illustrates selected portions of an elevator system 20. An elevator car 22 is situated within a hoistway for vertical movement between landings, such as building levels. A magnetic drive arrangement 30 includes a rotary magnetic drive member 32 and a stationary magnetic drive member 34. In the illustrated example, the rotary magnetic drive member 32 is supported for movement with the elevator car 22 relative to the stationary member 34.

Figure 1 schematically shows a ropeless elevator system. The magnetic drive arrangement 30 may be used instead of a hydraulic or traction-based elevator propulsion arrangement. Alternatively, the magnetic drive arrangement 30 may be used in a roped elevator system in which the elevator car 22 is coupled with a counterweight and the magnetic drive 30 provides the force for moving the elevator.

Figure 2 illustrates an example embodiment of the magnetic drive member 32. In this embodiment, the drive member 32 may be considered a magnetic screw that can be rotated for purposes of interacting with cooperative features of the magnetic drive arrangement 30 to cause desired movement of the elevator car 22. The magnetic drive member 32 according to the invention comprises a rod 40 made of a non-magnetic material. In the illustrated example, the rod 40 comprises a hollow cylinder. In one example, the rod comprises an austenitic stainless steel. Other non-magnetic materials may be used to meet the needs of a particular situation. A variety of rod configurations may be used in different embodiments.

A helical magnet 42 is situated on and secured to the rod 40. A helical spacer 44 is situated within spacing between axially adjacent turns of the helical magnet 42.

The turns of the magnet 42 are magnetically configured to have alternating pole directions as schematically shown in Figure 3. Oppositely oriented poles of axially adjacent segments of the helical magnet 42 face toward a portion or segment of the spacer 44 between those segments of the magnet 42. For example, a first pole segment 42A of the helical magnet 42 faces a second pole segment 42B. Additional pole segments 42C and 42D of the helical magnet 42 face each other. Such an arrangement of magnetically oriented segments of the magnet 42 is repeated along the length of the magnetic drive member 32.

With the magnetic poles arranged as schematically shown in Figure 3, a plurality of magnetic flux paths are established along the length of the magnetic drive member 32 for interacting with a correspondingly configured stator or stationary magnetic drive member of the magnetic drive 30 to cause movement of the elevator car 22 in a vertical direction. An example flux path is shown at 50 where magnetic flux emanates outward from one segment 44A of the spacer between the north pole segments 42A and 42B, through an appropriate portion of the stationary magnetic drive member 34, such as a metallic tooth as schematically illustrated in phantom at 52, and back toward a portion or segment 44B of the spacer 44 between the segments 42B and 42C of the helical magnet 42. Additional magnetic flux flows through a segment 44C of the spacer 44 from between magnet segments 42 C and 42D, through a tooth 52 of the stationary portion of the magnetic drive 30, and back toward the rod 40 through the spacer segment 44B. Although not illustrated, there will be leakage flux between the spacer segment 44A and the magnet 42 B and from the spacer segment 44B to the magnet 42 B, for example.

Given that the operation of linear and rotary magnetic drives is generally known, no further explanation need be provided within this description regarding how magnetic flux and rotary motion results in a linear or vertical movement.

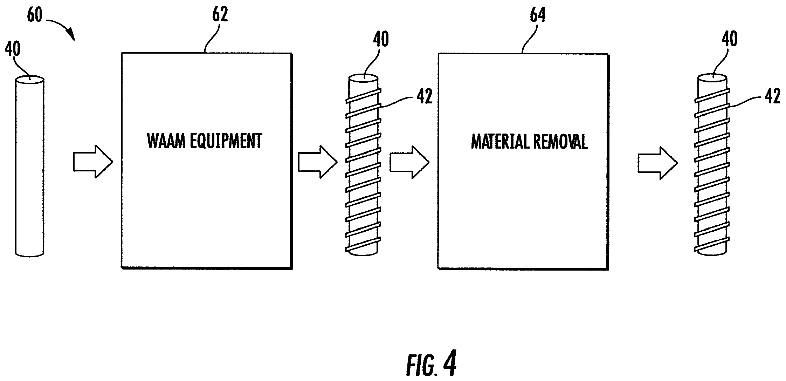

Figure 4 schematically illustrates a process 60 for making a magnetic drive member designed according to an embodiment of this invention. According to the invention additive manufacturing equipment 62 is utilized for establishing the helical magnet 42 on the rod 40. In the illustrated example, the helical magnet 42 is established using a wire arc additive manufacturing technique, an additive friction stir manufacturing technique, or a wire feed additive manufacturing technique. Such techniques are generally known. Other example additive manufacturing techniques that can be used according to the invention include cold spray and laser or directed energy deposition techniques, which may be used with wire or base material in a powder form.

Embodiments that include cold spray additive manufacturing include the potential to avoid disrupting or removing desired phases and microstructures in the material because the powder is not melted and such characteristics could be removed during melting.

In the example of Figure 4, after the additive manufacturing, at least some of the material that was added by the additive manufacturing equipment 62 is removed by material removal equipment schematically shown at 64. One example includes turning the rod 40 on a lathe for removing a portion of the material of the magnet that was added to the rod 40 by the additive manufacturing process. The removal equipment 64 may be configured, for example, to establish a desired cross-section of the helical magnet 42. In other embodiments the additive manufacturing process results in a desired configuration or cross-section of the helical magnet 42 and no material removal is required.

The spacer 44 in some embodiments is added to or incorporated as part of the rod 40 prior to the helical magnet 42 being formed on the rod 40. In other embodiments the spacer 44 is formed using an additive manufacturing process, which can be completed after the helical magnet 42 is established.

One feature of the additive manufacturing technique used according to the invention is that it allows for using a non-magnetic material for the rod 40 and a magnetic material for the helical magnet 42. Additive manufacturing techniques, such as those mentioned above, allow for joining dissimilar materials in a way that results in a sufficiently robust arrangement of the helical magnet 42 on the rod 40 to withstand the forces involved in operating the elevator drive arrangement 30. In an example embodiment, the helical magnet 42 comprises a permanent magnet material, the spacers 44 comprise a mild steel, and the rod 40 comprises a non-magnetic metal, such as stainless steel. Example permanent magnet materials include rare earth permanent magnets such as sintered Nd2Fe14B; sintered SmCo5; sintered Sm(Co,Fe,Cu,Zr)7; bonded Nd2Fe14B; sintered alloys comprising aluminum, nickel and cobalt; or non-rare earth magnets such as Manganese Bismuth, and sintered M-type hexagonal ferrites (e.g., Sr-Ferrite).

The additive manufacturing equipment 62 allows for specific control over the configuration and size of the helical magnet 42. In one example, the rod 40 has a 50 mm or two inch outer diameter. The helical magnet 42 has a height of approximately 15 mm or one-half inch (extending radially outward from the outer surface of the rod 40) with a 25 mm or one inch spacing between axially adjacent turns of the helical magnet 42. Other dimensions are useful for some elevator drive arrangements.

The additive manufacturing used in the illustrated embodiment can be considered metal additive manufacturing because the material of the helical magnet 42 consists of only metal. Additively manufacturing the helical magnet 42 without including any polymer provides a more consistent magnetic path and a stronger magnet. In embodiments that include polymers or other materials within the magnet 42, the magnetic path would be at least partially interrupted by such material and the magnet would have to be larger in size to achieve a corresponding magnetic strength to a smaller sized all-metal magnet.

The helical magnet 42 is continuous and uninterrupted along the length of the helix. This configuration is superior to an arrangement of individual magnets situated next to each other along a helical or spiraled path. Individual magnets introduce leakage flux between adjacent magnets, additional harmonics and losses within the magnetic drive 30 that reduce effective thrust and cause noise and vibration.

The magnet 42 is magnetized in some example embodiments by applying a magnetic field during the additive manufacturing process to align the particles of the magnet material for achieving a configuration of pole orientation like that shown in Figure 3, for example. Additional magnetization may be accomplished once the additive manufacturing is complete by using an external exciter coil in combination with capacitive charge that would provide short impulse magnetic field to magnetize in the required direction (e.g., for a north pole). The direction of the current can be changed to the opposite direction to alter the magnetization direction (e.g., for a south pole) in the adjacent magnet. The span of this magnetizing coil can either cover one full helical structure or a portion of the structure and the component 32 will be moved vertically and circumferentially to align the next helical magnet portion with the magnetizer coil to magnetize the next helical portion. Therefore, the exciter coil in such an embodiment can be used to magnetize only a portion of the helical magnet at a time.

In some embodiments, the spacers 44 are not included throughout the gap between all turns of the helical magnet 42. In spaces not occupied by spacers 44, magnetizing hardware configured to fit within the gap facilitates magnetizing the permanent magnet 42. In some examples, after such magnetization, additional spacers 44 are included in gaps that were used for accommodating the magnetizing hardware.

The example disclosed magnetic drive member 32 has increased magnetic efficiency compared to prior arrangements, which allows for using a smaller sized drive member, reducing the cost of the magnetic drive system and reducing the amount of space required within an elevator hoistway for the magnetic drive.

One feature of using a single, continuous helical magnet 42 as included in the illustrated embodiment is that it reduces any requirement for wrapping the magnetic drive member 32 in carbon fiber as would otherwise be needed for retaining individual magnets in place along the helical path occupied by the helical magnet 42. One drawback to using such a wrap in some previous rotary magnetic drive arrangements is the added effective air gap introduced by the wrap, which reduces the magnetic effectiveness of the system and potentially introduces variation of flux levels between magnet segments. Instead, embodiments of this invention include a helical magnet 42 bonded to a rod in a manner that does not require a carbon fiber wrap even for high speed applications. The helical magnet 42 and the spacer 44 establish an improved magnetic circuit even in embodiments that are intended for higher rotational speeds.

The preceding description is exemplary rather than limiting in nature. Variations and modifications to the disclosed examples may become apparent to those skilled in the art that do not necessarily depart from the scope of the appended claims.

The scope of legal protection given to this invention can only be determined by studying the following claims.

## Claims

1. A method of making a rotary magnetic drive member (34), the method comprising:
establishing a continuous helical magnet (42) comprising a plurality of turns on a non-magnetic rod (40) with an axial spacing between axially adjacent segments of the helical magnet (42) using an additive manufacturing process including wire arc additive manufacturing, additive friction stir manufacturing, wire feed additive manufacturing, cold spray deposition, laser deposition, directed energy deposition, wherein the helical magnet (42) is continuous and uninterrupted along a helical path along the rod (40).

2. The method of claim 1, wherein the helical magnet (42) comprises a magnetic material and the rod (40) comprises a non-magnetic material.

3. The method of claim 2, wherein the magnetic material comprises low carbon steel.

4. The method of claim 2 or 3, wherein the non-magnetic material comprises stainless steel.

5. The method of any of claims 1 to 4, wherein the helical magnet (42) comprises a permanent magnet material.

6. The method of any of claims 1 to 5, wherein the helical magnet (42) consists entirely of metal.

7. The method of any of claims 1 to 6, comprising establishing a pattern of magnetic poles on segments (42A, 42B, 42C, 42D) of the helical magnet (42) including like magnetic poles in axially adjacent segments of the helical magnet (42).

8. The method of claim 7, wherein establishing the pattern of magnetic poles comprises using an external exciter coil in combination with a capacitive charge that provides a short impulse magnetic field to magnetize in a required direction.

9. A rotary magnetic drive member (34), comprising:
a non-magnetic rod (40); and
a helical magnet (42) comprising a plurality of turns supported on the non-magnetic rod (40) with an axial spacing between axially adjacent segments of the helical magnet (42),
wherein the helical magnet (42) on the non-magnetic rod (40) is made using an additive manufacturing process including wire arc additive manufacturing, additive friction stir manufacturing, wire feed additive manufacturing, cold spray deposition, laser deposition, directed energy deposition, and
in that the helical magnet (42) is continuous and uninterrupted along a helical path along the rod (40).

10. The magnetic drive member (34) of claim 9, wherein the rod (40) comprises a hollow cylinder.

11. The magnetic drive member (34) of claim 9 or 10, wherein the helical magnet (42) comprises mild steel; and
wherein the rod (40) comprises stainless steel.

12. The magnetic drive member (34) of any of claims 9 to 11, wherein the helical magnet (42) consists entirely of metal applied to the rod (40) during an additive manufacturing process.

13. The magnetic drive member (34) of any of claims 9 to 12, comprising a spacer (44) between axially adjacent segments of the helical magnet (42), the spacer (44) comprising a non-metallic material.

14. The magnetic drive member (34) of any of claims 9 to 13, wherein the helical magnet (42) comprises a plurality of segments (42A, 42B, 42C, 42D) having a selected magnetic pole pattern; and
wherein segments (42A, 42B, 42C, 42D) with like poles are axially adjacent to each other.n

15. The magnetic drive member (34) of any of claims 9 to 14, wherein the helical magnet (42) comprises a permanent magnet material.

## Patentansprüche

1. Verfahren zur Herstellung eines rotierenden magnetischen Antriebselements (34), wobei das Verfahren Folgendes umfasst:
Bilden eines kontinuierlichen spiralförmigen Magneten (42), der eine Vielzahl von Windungen auf einem nichtmagnetischen Stab (40) mit einem axialen Abstand zwischen axial benachbarten Segmenten des spiralförmigen Magneten (42) umfasst, unter Verwendung eines Prozesses zur additiven Fertigung, der additive Fertigung mit Drahtlichtbogen, additive Reibrührfertigung, additive Fertigung mit Drahtzuführung, Kaltspritzabscheidung, Laserabscheidung, gerichtete Energieabscheidung beinhaltet, wobei der spiralförmige Magnet (42) kontinuierlich und ununterbrochen entlang einer spiralförmigen Bahn entlang des Stabs (40) ist.

2. Verfahren nach Anspruch 1, wobei der spiralförmige Magnet (42) ein magnetisches Material umfasst und der Stab (40) ein nichtmagnetisches Material umfasst.

3. Verfahren nach Anspruch 2, wobei das magnetische Material kohlenstoffarmen Stahl umfasst.

4. Verfahren nach Anspruch 2 oder 3, wobei das nichtmagnetische Material Edelstahl umfasst.

5. Verfahren nach einem der Ansprüche 1 bis 4, wobei der spiralförmige Magnet (42) ein Permanentmagnetmaterial umfasst.

6. Verfahren nach einem der Ansprüche 1 bis 5, wobei der spiralförmige Magnet (42) vollständig aus Metall besteht.

7. Verfahren nach einem der Ansprüche 1 bis 6, umfassend das Bilden eines Musters aus Magnetpolen auf Segmenten (42A, 42B, 42C, 42D) des spiralförmigen Magneten (42), beinhaltend gleiche Magnetpole in axial benachbarten Segmenten des spiralförmigen Magneten (42).

8. Verfahren nach Anspruch 7, wobei das Bilden des Musters aus Magnetpolen Verwenden einer externen Erregerspule in Kombination mit einer kapazitiven Ladung umfasst, die ein kurzes Impulsmagnetfeld bereitstellt, um in einer erforderlichen Richtung zu magnetisieren.

9. Rotierendes magnetisches Antriebselement (34), umfassend:
einen nichtmagnetischen Stab (40); und
einen spiralförmigen Magneten (42), der eine Vielzahl von Windungen umfasst, die auf dem nichtmagnetischen Stab (40) mit einem axialen Abstand zwischen axial benachbarten Segmenten des spiralförmigen Magneten (42) getragen wird,
wobei der spiralförmige Magnet (42) auf dem nichtmagnetischen Stab (40) unter Verwendung eines Prozesses zur additiven Fertigung hergestellt wird, der additive Fertigung mit Drahtlichtbogen, additive Reibrührfertigung, additive Fertigung mit Drahtzuführung, Kaltspritzabscheidung, Laserabscheidung, gerichtete Energieabscheidung beinhaltet, und
dass der spiralförmige Magnet (42) kontinuierlich und ununterbrochen entlang einer spiralförmigen Bahn entlang des Stabs (40) ist.

10. Magnetisches Antriebselement (34) nach Anspruch 9, wobei der Stab (40) einen Hohlzylinder umfasst.

11. Magnetisches Antriebselement (34) nach Anspruch 9 oder 10, wobei der spiralförmige Magnet (42) Weichstahl umfasst; und wobei der Stab (40) Edelstahl umfasst.

12. Magnetisches Antriebselement (34) nach einem der Ansprüche 9 bis 11, wobei der spiralförmige Magnet (42) vollständig aus Metall besteht, das während eines Prozesses zur additiven Fertigung auf den Stab (40) aufgebracht wird.

13. Magnetisches Antriebselement (34) nach einem der Ansprüche 9 bis 12, umfassend einen Abstandshalter (44) zwischen axial benachbarten Segmenten des spiralförmigen Magneten (42), wobei der Abstandshalter (44) ein nichtmetallisches Material umfasst.

14. Magnetisches Antriebselement (34) nach einem der Ansprüche 9 bis 13, wobei der spiralförmige Magnet (42) eine Vielzahl von Segmenten (42A, 42B, 42C, 42D) umfasst, die ein ausgewähltes Magnetpolmuster aufweist; und
wobei Segmente (42A, 42B, 42C, 42D) mit gleichen Polen axial benachbart zueinander sind.

15. Magnetisches Antriebselement (34) nach einem der Ansprüche 9 bis 14, wobei der spiralförmige Magnet (42) ein Permanentmagnetmaterial umfasst.

## Revendications

1. Procédé de fabrication d'un élément d'entraînement magnétique rotatif (34), le procédé comprenant :
l'établissement d'un aimant hélicoïdal (42) continu comprenant une pluralité de spires sur une tige non magnétique (40) avec un espacement axial entre des segments axialement adjacents de l'aimant hélicoïdal (42) à l'aide d'un procédé de fabrication additive comportant la fabrication additive par arc électrique, la fabrication additive par agitation par friction, la fabrication additive par alimentation en fil, le dépôt par pulvérisation à froid, le dépôt laser, le dépôt d'énergie dirigée, dans lequel l'aimant hélicoïdal (42) est continu et ininterrompu le long d'un trajet hélicoïdal le long de la tige (40) .

2. Procédé selon la revendication 1, dans lequel l'aimant hélicoïdal (42) comprend un matériau magnétique et la tige (40) comprend un matériau non magnétique.

3. Procédé selon la revendication 2, dans lequel le matériau magnétique comprend de l'acier à faible teneur en carbone.

4. Procédé selon la revendication 2 ou 3, dans lequel le matériau non magnétique comprend de l'acier inoxydable.

5. Procédé selon l'une quelconque des revendications 1 à 4, dans lequel l'aimant hélicoïdal (42) comprend un matériau d'aimant permanent.

6. Procédé selon l'une quelconque des revendications 1 à 5, dans lequel l'aimant hélicoïdal (42) est entièrement constitué de métal.

7. Procédé selon l'une quelconque des revendications 1 à 6, comprenant l'établissement d'un motif de pôles magnétiques sur des segments (42A, 42B, 42C, 42D) de l'aimant hélicoïdal (42) comportant des pôles magnétiques similaires dans des segments axialement adjacents de l'aimant hélicoïdal (42).

8. Procédé selon la revendication 7, dans lequel l'établissement du motif de pôles magnétiques comprend l'utilisation d'une bobine d'excitation externe en combinaison avec une charge capacitive qui fournit un champ magnétique à impulsion courte pour magnétiser dans une direction requise.

9. Élément d'entraînement magnétique rotatif (34), comprenant :
une tige non magnétique (40) ; et
un aimant hélicoïdal (42) comprenant une pluralité de spires supportées sur la tige non magnétique (40) avec un espacement axial entre des segments axialement adjacents de l'aimant hélicoïdal (42),
dans lequel l'aimant hélicoïdal (42) sur la tige non magnétique (40) est fabriqué à l'aide d'un procédé de fabrication additive comportant la fabrication additive par arc électrique, la fabrication additive par agitation par friction, la fabrication additive par alimentation en fil, le dépôt par pulvérisation à froid, le dépôt laser, le dépôt d'énergie dirigée, et
en ce que l'aimant hélicoïdal (42) est continu et ininterrompu le long d'un trajet hélicoïdal le long de la tige (40).

10. Élément d'entraînement magnétique (34) selon la revendication 9, dans lequel la tige (40) comprend un cylindre creux.

11. Élément d'entraînement magnétique (34) selon la revendication 9 ou 10, dans lequel l'aimant hélicoïdal (42) comprend de l'acier doux ; et
dans lequel la tige (40) comprend de l'acier inoxydable.

12. Élément d'entraînement magnétique (34) selon l'une quelconque des revendications 9 à 11, dans lequel l'aimant hélicoïdal (42) est entièrement constitué de métal appliqué sur la tige (40) pendant un procédé de fabrication additive.

13. Élément d'entraînement magnétique (34) selon l'une quelconque des revendications 9 à 12, comprenant un espaceur (44) entre des segments axialement adjacents de l'aimant hélicoïdal (42), l'espaceur (44) comprenant un matériau non métallique.

14. Élément d'entraînement magnétique (34) selon l'une quelconque des revendications 9 à 13, dans lequel l'aimant hélicoïdal (42) comprend une pluralité de segments (42A, 42B, 42C, 42D) ayant un motif de pôle magnétique sélectionné ; et dans lequel des segments (42A, 42B, 42C, 42D) avec des pôles similaires sont axialement adjacents les uns aux autres.

15. Élément d'entraînement magnétique (34) selon l'une quelconque des revendications 9 à 14, dans lequel l'aimant hélicoïdal (42) comprend un matériau d'aimant permanent.
